(19) Europäisches Patentamt
European Patent Office
Office européen des brevets

(11) Publication number: 0 111 722 B1

(12) EUROPEAN PATENT SPECIFICATION

(45) Date of publication of patent specification: 04.03.87

(51) Int. Cl.$^4$: C 08 G 65/44

(21) Application number: 83111115.8

(22) Date of filing: 08.11.83

# (54) Copper-amine catalyst and method for the production of polyphenylene ether resins.

(30) Priority: 16.11.82 US 442140

(43) Date of publication of application:
27.06.84 Bulletin 84/26

(45) Publication of the grant of the patent:
04.03.87 Bulletin 87/10

(84) Designated Contracting States:
DE FR GB IT NL

(56) References cited:
DE-A-2 505 328
US-A-3 900 445
US-A-3 914 266
US-A-4 092 294

(73) Proprietor: GENERAL ELECTRIC COMPANY
1 River Road
Schenectady New York 12305 (US)

(72) Inventor: Bennett, James Gordy, Jr.
16 East Bayberry Drive
Glenmont, NY 12077 (US)
Inventor: Floryan, Daniel Edwin
Rt. 49 Colonial Acres
Pittsfield, MA 01201 (US)

(74) Representative: Schüler, Horst, Dr. European Patent Attorney et al
Kaiserstrasse 41
D-6000 Frankfurt/Main 1 (DE)

**The file contains technical information submitted after the application was filed and not included in this specification**

EP 0 111 722 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Background of the Invention

The polyphenylene ether resins and methods for their preparation are well known to the polymer art. These polymers may be made by a variety of catalytic and non-catalytic processes from the corresponding phenols or reactive derivatives thereof. By way of illustration, certain of the polyphenylene ethers and methods of preparation are disclosed in Hay, U.S. 3,306,874 and 3,306,875 and in Stamatoff, U.S. 3,257,357 and 3,257,358. In the Hay patents, the polyphenylene ethers are prepared by an oxidative coupling reaction comprising passing an oxygen-containing gas through a reaction solution of a phenol and a metal-amine complex catalyst. Other disclosures relating to processes for preparing polyphenylene ether resins including graft copolymers of polyphenylene ethers with styrene type compounds, are found in Fox, U.S. 3,356,761; Sumitomo, U.K. 1,291,609; Bussink et al., U.S. 3,337,499; Blanchard et al., U.S. 3,219,626; Laakso et al., U.S. 3,384,619, Faurote et al., U.S. 3,440,217; and disclosures relating to metal-based catalysts which do not include amines, are known from patents such as Wieden et al., U.S. 3,442,885 (copper-amidines); Nakashio et al., U.S. 3,573,257 (metal-alcoholate or -phenolate); Kobayashi et al., U.S. 3,455,880 (cobalt chelates); and the like.

Catalyst systems based on cupric or cuprous salts and primary, secondary, or tertiary amines, with additives such as alkali or alkaline earth metal bromides and quaternary ammonium salts, have been disclosed. See, for example, Cooper et al., U.S. 3,733,299 and Bennett et al., U.S. 3,977,297. There are some difficulties encountered in the use of these copper salt-alkali metal bromide catalysts, however. One difficulty is the tendency of catalyst solutions in methanol when they are allowed to contact water, to lose activity, thus requiring larger amounts of catalyst to give acceptable molecular weight in the polyphenylene oxide. Another difficulty is that the anhydrous cupric salts are not readily available commercially and are generally expensive to obtain. A third difficulty is that when methanol is used as the vehicle for the catalyst, it is extracted with the catalyst, after reaction, by aqueous solutions of acids or chelating agents, thus requiring for economic and environmental reasons an expensive distillation operation to recover the methanol from these aqueous solutions.

Also known are catalyst systems prepared from copper compounds and amines. One system of this kind, comprising a copper compound (cuprous, or alternatively, cupric) a diamine, a tertiary amine and a source of bromide ion, is described by Allan Hay in U.S. Patent No. 3,914,266. Another system, which further includes a secondary monoamine, is described by James Bennett, Jr. and Glenn Cooper in U.S. 4,092,294. The temperature sensitivity of these catalysts can be lessened by including methanol in the reaction mixture and conducting the polymerization in the presence of this alcohol as exemplified in these patents. The use of methanol requires the addition of water to the reaction mixture prior to extraction of the catalyst and recovery of the polymer, however. The methanol is, moreover, separated from the resultant methanol-water phase by distillation and this can be time consuming and costly.

In practice it has been observed that while most copper salts, cuprous or cupric, are useful in those catalyzed processes in which methanol is present, when the reaction is attempted in the absence of methanol not all cuprous (monovalent) compounds are effective and most cupric (divalent) compounds are not. By "effective" it is meant that the polymer which is produced does not have a sufficiently high intrinsic viscosity for it to be a good molding grade resin. Usually, the polymer should have a viscosity of about 0.4 deciliters per gram, or higher, as measured in chloroform at 30°C., otherwise the resin does not mold well and the molded article suffers from deficiencies in one or more important physical properties.

U.S. Patent No. 3,900,445 provides a description of a process for the preparation of polyphenylene ethers by the oxidative coupling of a phenol in the presence of a cuprous and cupric copper-amine catalyst which is also capable of operation in the absence of methanol.

The need still exists, however, for a copper-amine polymerization catalyst system useful for the preparation of polyphenylene ether resin which provides a cost advantage over known catalysts without sacrificing catalyst activity.

### Introduction to the Invention

According to the present invention there is provided a new catalyst system for the oxidative coupling of a phenolic compound to form polyphenylene ether resin, comprising, in effective amounts:

(a) a bromine containing compound;
(b) a cuprous compound;
(c) a cupric compound; and
(d) an amine portion comprising at least a secondary diamine.

Another facet of the invention comprises a process for the preparation of a polyphenylene ether resin employing the described catalyst.

This invention represents an improvement over a process such as disclosed in U.S. 4,092,294 in the sense that for the same amount of copper employed, the present process is more inexpensive, which is due chiefly to the presence of cupric (divalent) copper. It is noteworthy that this cost advantage is achieved while maintaining the same level of catalyst activity, which is surprising because cupric copper is known to be less effective, and in some cases totally ineffective, in comparison with cuprous copper in copper-amine catalyst systems for the oxidative coupling of phenols.

Description of the Invention

In practicing the invention, the copper moiety of the catalyst is supplied in the form of cupric and cuprous compounds. Virtually any cupric or cuprous compound can be employed, the particular choices being chiefly determined by economics and the ready availability of the compounds. While soluble copper salts are preferred, it is to be noted that normally insoluble copper compounds (cupric and cuprous) are also useful because they will form a soluble complex with the amine in the reaction mixture.

Examples of cupric compounds which may be used in this catalyst include cupric halides, such as cupric chloride and cupric bromide; cupric sulfate; cupric nitrate; cupric acetate; cupric azide; and cupric toluate. Illustrative of the cuprous compounds which may be employed are cuprous chloride and cuprous bromide; cuprous sulfate; cuprous nitrate; cuprous azide; cuprous acetate; cuprous butyrate; and cuprous toluate. Preferred cuprous and cupric compounds are the halides, such as cuprous bromide and cupric bromide.

In formulating the catalyst, cuprous oxide and cupric oxide may be employed in addition to, or in place of, the aforementioned copper compounds, it being important only that the catalyst comprise at least one source of divalent copper.

The cupric compound and the cuprous compound are preferably present in amounts sufficient to provide a molar ratio of cupric copper to cuprous copper within the range 3:1 and 1:3, in the initial reaction mixture. In the most preferred cases, the molar ratio is about 1:1 although this is not essential for good results.

The cupric compound and the cuprous compound may be introduced into the reaction mixture separately. Alternatively, they may be dissolved in a convenient carrier or solvent for both, for example, hydrobromic acid, to form a catalyst pre-mix which is then added to the reaction mixture.

As a further alternative, either or both of the compounds can be prepared in situ in the reaction mixture, for example, by the reaction of bromine or hydrogen bromide with cuprous oxide and/or cupric carbonate.

The amine portion of the catalyst of this invention always comprises a secondary diamine and a tertiary amine. Useful diamines are any of those which are disclosed in U.S. Patent No. 3,914,266 and U.S. Patent No. 4,092,294. They include those of the formula

$$R^1HN—R^2—NHR^1$$

in which each $R^1$ is, independently, isopropyl, a $C_{4-8}$ tertiary alkyl (i.e., having from four to eight carbon atoms), or a cycloalkyl group having no hydrogens on the alpha carbon atom; and $R^2$ has at least two and no more than three carbon atoms separating the two nitrogen atoms and is $C_{2-4}$ alkylene or $C_{3-7}$ alkylene. Examples include: N,N'-di-t-butylethylene diamine; N,N'-di-t-amylethylene diamine; and N,N'-di-isopropylethylene diamine. Preferred is N,N'-di-t-butylethylene diamine.

The amine portion of the catalyst also includes a tertiary amine, and especially one having low steric requirements. Examples of these compounds are tri-lower alkyl amines in which the alkyl groups have from 1 to 6 carbon atoms, such as trimethyl amine or n-butyldimethyl amine. Cyclic amines, e.g., n-methylpyrrolidine, may also be employed.

According to a preferred embodiment of the invention the amine portion of the catalyst contains a mixture of N,N'-di-t-butylethylene diamine, n-butyldimethyl amine and di-n-butyl amine.

The catalyst of this invention may, and usually does, also include a secondary monoamine such as described, for instance, in U.S. 4,092,294. The preferred monoamines are those of the formula

H
|
R—N—R'

in which R and R' are independently selected from the group of lower alkyls having from 1 to 12 carbon atoms, and especially from 3 to 6 carbon atoms. Examples of suitable lower alkyl substituents include ethyl, n-propyl, i-propyl, n-butyl, n-hexyl, n-octyl, n-decyl. The most preferred secondary monoamine is di-n-butyl amine.

As explained, the catalyst system of this invention also contains a bromine containing compound. Any source of bromine may be utilized, but in the usual case the bromine compound will be selected from among the more readily available materials. Specific mention is made of alkali metal compounds, such as the bromides of sodium, potassium, lithium, rubidium and cesium, as well as alkaline earth metal compounds, such as the bromides of calcium, strontium and barium. Preferred are alkali metal salts such as potassium bromide and sodium bromide. Also preferred is hydrobromic acid because it serves as a convenient carrier for the copper compounds in the catalyst and thus can serve two different functions.

The catalyst may be formulated to provide widely variant amounts of the respective ingredients as follows. The diamine may be employed at a ratio of from 1 to 3 moles of diamine per gram atom of copper, and more preferably, from 1 to 2 moles per gram atom. The molar ratio of the tertiary amine to copper may be from 10 to 40 moles per gram atom of copper, and more preferably, from 20 to 40 moles per gram atom. The secondary monoamine may be used such that the weight ratio of the starting phenolic to the secondary monoamine is in the range between 50:1 and 500:1, and more usually, between 100:1 and 300:1. The molar ratio of the starting phenolic to copper (i.e., the total copper supplied in the catalyst) is preferably from 400:1 to 1500:1, and more preferably from 500:1 to 1000:1. The

bromine containing compound is preferably added in amounts sufficient to provide a ratio of bromine atoms per atom of copper between 5:1 and 50:1, and more preferably, between 5:1 and 30:1.

The catalyst which has just been described is useful in processes for the formation of polyphenylene ether resin (or polyphenylene oxide resins, as they are sometimes called), by the oxidative coupling reaction of a phenolic compound or compounds. The phenolic compound which is employed as the starting material in such a reaction is preferably one of the formula

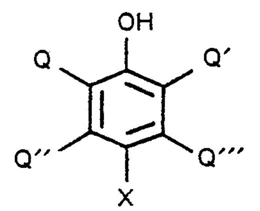

wherein X is selected from the group of hydrogen, chlorine, bromine, and iodine and Q, Q', Q'' and Q''' are independently selected from the group consisting of hydrogen, halogen hydrocarbon radicals, halohydrocarbon radicals, hydrocarbonoxy radicals, halohydrocarbonoxy radicals. Special mention is made of the compound 2,6-xylenol which may be used as such or in admixture with other substituted phenols in amounts up to, e.g., 20%, such as 2,3,6-trimethyl phenol and 2-methyl-6-butyl phenol, to make the corresponding homopolymer or copolymer.

The catalyst and process of this invention is useful to form homo- or copolymers of the formula

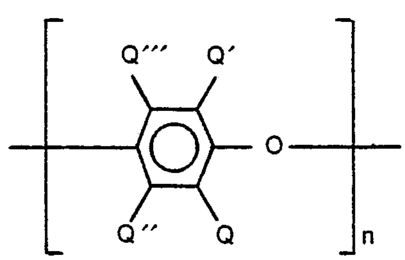

where Q, Q', Q'' and Q''' are independently selected from the group consisting of hydrogen, halogen, hydrocarbon radicals, halohydrocarbon radicals, hydrocarbonoxy radicals, and halohydrocarbonoxy radicals; and n represents the total number of monomer units and is an integer of at least about 20, and more usually at least about 50.

The preferred end product is poly(2,6-dimethyl-1,4-phenylene ether) resin.

By way of illustration, the process of the invention may be conducted by introducing a 2,6-disubstituted phenol, the described catalyst components and a solvent to a reaction vessel of suitable capacity. As the solvent, any organic liquid which is conventionally employed in polyphenylene ether forming reactions may be used, for example, toluene, or others named in the above-mentioned patents. Alternatively, the reaction may be conducted in an excess amount of the amine or amines which function as a solvent for the components. The reaction temperature may be permitted to vary between 0° and about 50°C., with care being taken to avoid excessively high temperatures known to result in degradation or other damage to the catalyst. The reaction is typically carried out at ambient pressure, but superatmospheric pressures of between, for example, 0.07 bar and 70 bar (1 and 1000 psig), or even higher, can be utilized if desired to decrease the reaction time.

When a polymer of the desired molecular weight has been obtained, the reaction may be terminated and the polymer recovered by means of any of the known techniques, including the addition of aqueous acetic acid and to the reaction mixture followed by precipitation of the polymer from solution with use of an antisolvent, such as methanol.

Notably, use of the catalyst of this invention avoids the necessity for methanol, or another alcohol such as ethanol, in the reaction mixture initially and during the reaction itself. Such lower alcohols are often recommended in the prior art to enhance the efficiency of the catalyst. They can be omitted from the presently disclosed procedure without any appreciable loss in effectiveness.

The resulting polymer is useful as such or in blends with other polymers for molding, film or fiber formation, as well as any of the other known uses for polyphenylene ether resins and resin blends.

Description of the Specific Embodiments

The invention is illustrated in the following examples, which are intended to show preferred embodiments and not to limit the invention.

Example 1 (Comparative)

The following reaction constituents were added to a one gallon capacity reaction vessel: 1624 milliliters of toluene, 1.77 grams of N,N'-di-t-butylethylene diamine, 20.8 grams of n-butyldimethyl amine, 8.14 grams of di-n-butyl amine, 0.53 gram of tri-octyl methyl ammonium chloride, and 106 grams of a 51 percent solution of 2,6-xylenol in toluene. There was then added a solution of 0.35 gram of cuprous oxide in 2.67 grams of hydrobromic acid (48%). An additional 956 grams of a 51 percent solution of 2,6-xylenol in toluene was added to the reaction vessel over a 30-minute period; the oxygen flow was maintained at 0,057 $m^3$ per hour (2 standard cubic feet per hour), with stirring of the reaction mixture at 1500 revolutions per minute. The temperature of the mixture was maintained at 40,5°C (105°F) over the first 60 minutes of the reaction, then was allowed to rise to 49°C (120°F) for the remainder of the reaction. The molar ratio of 2,6-xylenol to copper to bromide ion was 900:1:3.2, respectively. After a period of 120 minutes, the reaction

was terminated by adding nitrogen and an excess amount of a 38 percent solution of ethylenediamine tetraacetic acid trisodium salt in water.

After the reaction was completed, poly(2,6-dimethyl-1,4-phenylene ether) resin was isolated by precipitation with methanol, recovered and dried. The intrinsic viscosity of the recovered polymer was 0.62 deciliters per gram, measured in solution in chloroform at 30°C.

Example 2 (Comparative)

The procedure of Example 1 was repeated, except using 0.48 gram of cuprous chloride in the catalyst instead of cuprous oxide. After 120 minutes of reaction, the polymer was isolated and found to have an intrinsic viscosity of 0.51 dl/g in chloroform at 30°C.

Example 3 (Comparative)

The procedure of Example 1 was repeated, using 0.67 gram of cupric chloride to replace the cuprous oxide. After 120 minutes a polymer having an intrinsic viscosity of only 0.20 dl/g (chloroform, 30°C.) was obtained, which is indicative of the relatively poor activity of cupric chloride.

Example 4

The procedure of Example 1 was repeated, except modified to be in accordance with the invention by replacing 0.35 gram of cuprous oxide with a mixture comprising 0.33 gram of cupric chloride and 0.18 gram of cuprous oxide (molar ratio of cupric to cuprous 1:1; molar ratio of 2,6-xylenol to copper still 900:1). A polymer having an intrinsic viscosity of 0.59 dl/g (chloroform, 30°C) was obtained, which is comparable to the viscosity of the polymer obtained in Example 1 despite the use of cupric chloride for half of the copper moiety (on a molar basis).

Example 5

The procedure of Example 1 was again repeated, except modified to be in accordance with the invention by replacing 0.35 gram of cuprous oxide with a mixture of 0.17 gram of cupric chloride and 0.26 gram of cuprous oxide (mol ratio of cupric to cuprous 1:3; mol ratio of 2,6-xylenol to copper moiety again 900:1). The viscosity of the resultant polymer was 0.60 dl/g (chloroform, 30°C).

Example 6

The procedure of Example 1 was again repeated, except modified in accordance with the invention by replacing 0.35 gram of cuprous oxide with a mixture of 0.50 gram of cupric chloride and 0.09 gram of cuprous oxide (molar ratio of cupric to cuprous 3:1; mol ratio of 2,6-xylenol to copper same as before). A polymer having an intrinsic viscosity of 0.39 deciliters per gram, in chloroform at 30°C., was obtained.

This example illustrates that while a similar improvement in the intrinsic viscosity of the polymer is obtained when 75 mol percent of the copper moiety is cupric, the viscosity is still about 0.4, which is perfectly acceptable as a molding grade resin for many applications.

Example 7

The procedure of Example 1 was repeated, except again modified to be according to the invention, this time by substituting the 0.35 gram amount of cuprous oxide with a mixture of 0.34 gram of cupric chloride and 0.24 gram of cuprous chloride (molar ratio of cupric to cuprous 1:1, molar ratio of 2,6-xylenol to copper 900:1 as before). The viscosity of the resultant polymer was 0.55 dl/g, measured in the same manner.

Example 8

The procedure was repeated, using a mixture of 0.2 gram of cupric oxide and 0.18 gram of cuprous oxide for the copper portion of the catalyst (molar ratio of cupric to cuprous 1:1). The viscosity of the resultant polymer was 0.41 dl/g.

The foregoing examples demonstrate the effectiveness of the use of a cupric compound and a cuprous compound, together, in the same copper-amine catalyst system. Poly(2,6-dimethyl-1,4-phenylene ether) resin of molding grade is obtained consistently with such a catalyst, even though the polymerization reaction is conducted in a substantially methanol-free reaction mixture (with methanol added only after completion of the reaction, to precipitate the polymer). The mixed cuprous and cupric system is comparable in activity to systems using only cuprous copper, and superior to systems using only cupric copper. The use of a mixed system in accordance with the invention provides the advantage of greater flexibility of choice among available copper sources, thus enabling the selection of more inexpensive copper compounds for use in the catalyst, as well as copper compounds which are more readily dissolved in hydrobromic acid or other media employed as a solvent for the catalyst prior to addition to the reaction mixture.

Other modifications and variations of the invention will occur to those skilled in the art in the light of the above disclosure. It is to be understood, therefore, that changes may be made in the particular embodiments shown without departing from the principles of the invention and without sacrificing the chief benefits.

**Claims**

1. A catalyst composition useful for the preparation of polyphenylene ether resin comprising:

(a) a bromine containing compound;

(b) a cuprous compound;

(c) a cupric compound; and

(d) an amine portion,

characterized in that the amine portion of the catalyst comprises a secondary diamine and a tertiary amine.

2. A composition according to Claim 1, in which the secondary diamine is of the formula

$$R^1HN—R^2—NHR^1$$

in which each $R^1$ is, independently, isopropyl, a $C_{4-8}$ tertiary alkyl or a cycloalkyl group having no hydrogen atoms on the alpha carbon atom, and $R^2$ has at least two and no more than three carbon atoms separating the two nitrogen atoms and is $C_{2-4}$ alkylene or $C_{3-7}$ alkylene.

3. A composition according to Claim 2, in which the secondary diamine is N,N'-di-t-butylethylene diamine.

4. A composition according to Claim 1, in which the tertiary amine is a tri-lower alkyl amine in which the alkyl groups have from 1 to 6 carbon atoms.

5. A composition according to Claim 4, in which the tertiary amine is n-butyldimethyl amine.

6. A composition according to Claim 1, in which component (d) also comprises a secondary monoamine.

7. A composition according to Claim 6, in which the tertiary amine is a tri-lower alkyl amine in which the alkyl groups have from 1 to 6 carbon atoms, and the secondary monoamine is a compound of the formula

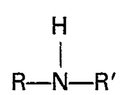

in which R and R' are independently selected from the group consisting of lower alkyls having from 1 to 12 carbon atoms.

8. A composition according to Claim 7, in which the secondary diamine is N,N'-di-t-butylethylene diamine, the tertiary amine is n-butyldimethyl amine, and the secondary monoamine is di-n-butyl amine.

9. A composition according to Claim 1, in which the molar ratio of cupric copper to cuprous copper is in the range between 3:1 and 1:3.

10. A composition according to Claim 1, which contains the secondary diamine in an amount of from 1 to 3 moles per gram atom of copper.

11. A composition according to Claim 1, which comprises the bromine containing compound in an amount sufficient to provide a ratio of bromine atoms per atom of copper between 5:1 and 50:1.

12. A catalyst composition useful for the preparation of a polyphenylene ether resin, comprising

(a) hydrobromic acid;

(b) a cuprous compound selected from the group consisting of cuprous oxide and cuprous chloride;

(c) a cupric compound selected from the group consisting of cupric oxide and cupric chloride; and

(d) a mixture of N,N'-di-t-butylethylene diamine, n-butyldimethyl amine, and di-n-butyl amine.

13. Process for the preparation of polyphenylene ether resin by the oxidative coupling of a phenolic compound in the presence of a catalyst comprising

(a) a bromine containing compound;

(b) a cuprous compound;

(c) a cupric compound; and

(d) an amine portion,

characterized in that the amine portion of the catalyst comprises a secondary diamine and a tertiary amine.

14. A process according to Claim 13, in which the reaction is carried out substantially free of methanol.

15. A process according to Claim 13, in which the phenolic compound is of the formula

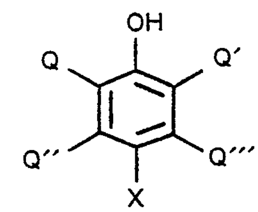

wherein X is selected from the group of hydrogen, chlorine, bromine, and iodine and Q, Q', Q'' and Q''' are independently selected from the group consisting of hydrogen, halogen, hydrocarbon radicals, halohydrocarbon radicals, hydrocarbonoxy radicals, and halohydrocarbonoxy radicals.

16. A process according to Claim 13, in which the phenolic compound is 2,6-xylenol.

17. A process according to Claim 13, in which the polyphenylene ether resin has the formula

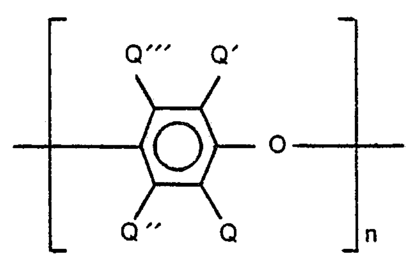

where Q, Q', Q'' and Q''' are independently selected from the group consisting of hydrogen, halogen, hydrocarbon radicals, halohydrocarbon radicals, hydrocarbonoxy radicals and halohydrocarbonoxy radicals; and n represents the total number of monomer units and is an integer of at least about 20.

18. A process according to Claim 13, in which the polyphenylene ether resin is poly(2,6-dimethyl-1,4-phenylene ether).

19. A process according to Claim 13, in which the molar ratio of cupric copper to cuprous copper is between 3:1 to 1:3.

20. A process according to Claim 13, in which the secondary diamine is of the formula

$$R^1HN—R^2—NHR^1$$

in which each $R^1$ is, independently, isopropyl, a

$C_{4-8}$ tertiary alkyl or a cycloalkyl group having no hydrogen atoms on the alpha carbon atom, and $R^2$ has at least two and no more than three carbon atoms separating the two nitrogen atoms and is $C_{2-4}$ alkylene or $C_{3-7}$ alkylene.

21. A process according to Claim 20, in which the secondary diamine is N,N'-di-t-butylethylene diamine.

22. A process according to Claim 13, in which the tertiary amine is a tri-lower alkyl amine in which the alkyl groups have from 1 to 6 carbon atoms.

23. A process according to Claim 13, in which the tertiary amine is n-butyldimethyl amine.

24. A process according to Claim 13, in which component (d) of the catalyst composition also comprises a tertiary amine and a secondary monoamine.

25. A process according to Claim 24, in which the tertiary amine is a tri-lower alkyl amine in which the alkyl groups have from 1 to 6 carbon atoms, and the secondary monoamine is a compound of the formula

H
|
R—N—R'

in which R and R' are independently selected from the group consisting of lower alkyls having from 1 to 12 carbon atoms.

26. A process according to Claim 25, in which the secondary diamine is N,N'-di-t-butylethylene diamine, the tertiary amine is n-butyldimethyl amine, and the secondary monoamine is di-n-butyl amine.

27. A process according to Claim 13, in which the catalyst composition contains the secondary diamine in an amount of from 1 to 3 moles per gram atom of copper.

28. A process according to Claim 13, in which the catalyst composition contains the bromine compound in an amount sufficient to provide a ratio of bromine atoms per atom of copper between 5:1 and 50:1.

29. Process for the preparation of poly(2,6-dimethyl-1,4-phenylene ether) resin by the oxidative coupling of 2,6-xylenol, in the presence of a catalyst composition comprising

(a) hydrobromic acid;

(b) a cuprous compound selected from the group consisting of cuprous oxide and cuprous chloride;

(c) a cupric compound selected from the group consisting of cupric oxide and cupric chloride; and

(d) an amine portion, characterized in that the amine portion of the catalyst comprises a mixture of N,N'-di-t-butylethylene diamine, n-butyldimethyl amine, and di-n-butyl amine.

**Patentansprüche**

1. Katalysatorzusammensetzung, die für die Herstellung von Polyphenylenätherharz brauchbar ist, enthaltend

(a) eine bromhaltige Verbindung,

(b) eine Kupfer(I)-Verbindung,

(c) eine Kupfer(II)-Verbindung und

(d) einen Aminanteil,

dadurch gekennzeichnet, daß der Aminanteil des Katalysators ein sekund. Diamin und ein tert. Amin umfaßt.

2. Zusammensetzung nach Anspruch 1, worin das sek. Diamin der Formel

$$R^1HN—R^2—NHR^1$$

entspricht, worin jedes $R^1$ unabhängig Isopropyl, eine $C_{4-8}$-tert. Alkyl- oder eine Cycloalkylgruppe ohne Wasserstoffatome an dem α-Kohlenstoffatom und $R^2$ wenigstens zwei und nicht mehr als drei Kohlenstoffatome darstellt, welche die beiden Stickstoffatome trennen und dabei $C_{2-4}$-Alkylen oder $C_{3-7}$-Alkylen ist.

3. Zusammensetzung nach Anspruch 2, worin das sek. Diamin N,N'-Di-t-butyläthylendiamin ist.

4. Zusammensetzung nach Anspruch 1, worin das tert. Amin ein niederes Trialkylamin ist, worin die Alkylgruppen 1 bis 6 Kohlenstoffatome aufweisen.

5. Zusammensetzung nach Anspruch 4, worin das tert. Amin n-Butyldimethylamin ist.

6. Zusammensetzung nach Anspruch 1, worin der Bestandteil (d) weiterhin ein sek. Monoamin enthält.

7. Zusammensetzung nach Anspruch 6, worin das tert. Amin ein niederes Trialkylamin ist, worin die Alkylgruppen 1 bis 6 Kohlenstoffatome aufweisen und das sek. Monoamin eine Verbindung der Formel

H
|
R—N—R'

ist, worin R und R' unabhängig voneinander ausgewählt sind aus der Gruppe bestehend aus niederen Alkylgruppen mit 1 bis 12 Kohlenstoffatomen.

8. Zusammensetzung nach Anspruch 7, worin das sek. Diamin N,N'-Di-t-butyläthylendiamin ist, das tert. Amin n-Butyldimethylamin ist, und das sek. Monoamin Di-n-butylamin ist.

9. Zusammensetzung nach Anspruch 1, worin das Molverhältnis des zweiwertigen Kupfers zum einwertigen Kupfer im Bereich zwischen 3:1 und 1:3 liegt.

10. Zusammensetzung nach Anspruch 1, welche das sek. Amin in einer Menge von 1 bis 3 Mol pro Grammatom Kupfer enthält.

11. Zusammensetzung nach Anspruch 1, welche die bromhaltige Verbindung in einer Menge aufweist, die ausreichend ist, um ein Verhältnis von Bromatomen pro Kupferatom zwischen 5:1 und 50:1 zu ergeben.

12. Katalysatorzusammensetzung, die für die Herstellung eines Polyphenylenätherharzes brauchbar ist, enthaltend

(a) Bromwasserstoffsäure,

(b) eine Kupfer(I)-Verbindung ausgewählt aus der Gruppe bestehend aus Kupfer(I)-oxid und Kupfer(I)-chlorid,

(c) eine Kupfer(II)-Verbindung ausgewählt aus der Gruppe bestehend aus Kupfer(II)-oxid und Kupfer(II)-chlorid, und

(d) eine Mischung aus N,N'-Di-t-butyläthylendiamin, n-Butyldimethylamin und Di-n-butylamin.

13. Verfahren zur Herstellung von Polyphenylenätherharz durch oxidative Kupplung einer phenolischen Verbindung in Anwesenheit eines Katalysators, der

(a) eine bromhaltige Verbindung,

(b) eine Kupfer(I)-Verbindung,

(c) eine Kupfer(II)-Verbindung, und

(d) einen Aminanteil enthält,

dadurch gekennzeichnet, daß der Aminanteil des Katalysators ein sekundäres Diamin und ein tert. Amin umfaßt.

14. Verfahren nach Anspruch 13, bei dem die Reaktion im wesentlichen in Abwesenheit von Methanol durchgeführt wird.

15. Verfahren nach Anspruch 13, bei dem die phenolische Verbindung der Formel

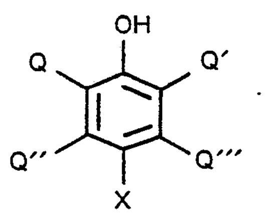

entspricht, worin X ausgewählt ist aus der Gruppe aus Wasserstoff, Chlor, Brom und Jod und Q, Q', Q'' und Q''' unabhängig voneinander ausgewählt sind aus der Gruppe bestehend aus Wasserstoff, Halogen, Kohlenwasserstoffresten, Halogenkohlenwasserstoffresten, Kohlenwasserstoffoxyresten und Halogenkohlenwasserstoffoxyresten.

16. Verfahren nach Anspruch 13, bei dem die phenolische Verbindung 2,6-Xylenol ist.

17. Verfahren nach Anspruch 13, bei dem das Polyphenylenätherharz der Formel

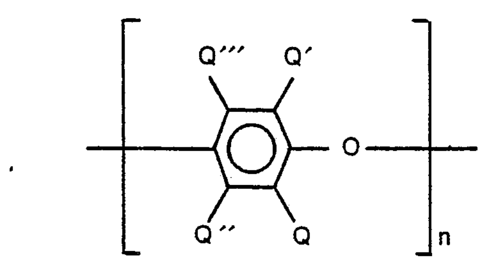

entspricht, worin Q, Q', Q'' und Q''' unabhängig voneinander ausgewählt sind aus der Gruppe bestehend aus Wasserstoff, Halogen, Kohlenwasserstoffresten, Halogenkohlenwasserstoffresten, Kohlenwasserstoffoxyresten und Halogenkohlenwasserstoffoxyresten und n die Gesamtzahl der Monomereinheiten darstellt und eine ganze Zahl von wenigstens etwa 20 ist.

18. Verfahren nach Anspruch 13, bei dem das Polyphenylenätherharz Poly(2,6-dimethyl-1,4-phenylenäther) ist.

19. Verfahren nach Anspruch 13, bei dem das molare Verhältnis von Kupfer(II) zu Kupfer(I) zwischen 3:1 und 1:3 liegt.

20. Verfahren nach Anspruch 13, bei dem das sek. Diamin der Formel

$$R^1HN—R^2—NHR^1$$

entspricht, worin jedes $R^1$ unabhängig voneinander Isopropyl, eine $C_{4-8}$-tert. Alkylgruppe oder eine Cycloalkylgruppe, die kein Wasserstoffatom an dem α-Kohlenstoffatom aufweist ist, und $R^2$ wenigstens zwei und nicht mehr als drei Kohlenstoffatome besitzt, die die beiden Stickstoffatome trennen und $C_{2-4}$-Alkylen oder $C_{3-7}$-Alkylen ist.

21. Verfahren nach Anspruch 20, worin das sek. Diamin N,N'-Di-t-butyläthylendiamin ist.

22. Verfahren nach Anspruch 13, worin das das tert. Amin ein niederes Trialkylamin ist, in dem die Alkylgruppen 1 bis 6 Kohlenstoffatome aufweisen.

23. Verfahren nach Anspruch 13, worin das tert. Amin n-Butyldimethylamin ist.

24. Verfahren nach Anspruch 13, worin der Bestandteil (d) der Katalysatorzusammensetzung auch ein tert. Amin und ein sek. Monoamin enthält.

25. Verfahren nach Anspruch 24, worin das tert. Amin ein niederes Trialkylamin ist, worin die Alkylgruppen 1 bis 6 Kohlenstoffatome aufweisen, und das sek. Monoamin eine Verbindung der Formel

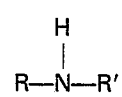

ist, worin R und R' unabhängig voneinander ausgewählt sind aus der Gruppe bestehend aus niederen Alkylgruppen mit 1 bis 12 Kohlenstoffatomen.

26. Verfahren nach Anspruch 25, worin das sek. Diamin N,N'-Di-t-butyläthylendiamin, das tert. Amin n-Butyldimethylamin und das sek. Monoamin Di-n-butylamin ist.

27. Verfahren nach Anspruch 13, worin die Katalysatorzusammensetzung das sek. Diamin in einer Menge von 1 bis 3 Molen pro Grammatom Kupfer enthält.

28. Verfahren nach Anspruch 13, worin die Katalysatorzusammensetzung die Bromverbindung in einer Menge enthält, die ausreicht, um ein Verhältnis der Bromatome pro Atom Kupfer zwischen 5:1 und 50:1 zu ergeben.

29. Verfahren zur Herstellung von Poly(2,6-dimethyl-1,4-phenylenäther)-Harz durch oxidative Kupplung von 2,6-Xylenol in Anwesenheit einer Katalysatorzusammensetzung, die enthält:

(a) Bromwasserstoffsäure,

(b) eine Kupfer(I)-Verbindung ausgewählt aus der Gruppe bestehend aus Kupfer(I)-oxid und Kupfer(I)-chlorid,

(c) eine Kupfer(II)-Verbindung ausgewählt aus der Gruppe bestehend aus Kupfer(II)-oxid und Kupfer(II)-chlorid, und

(d) einen Aminanteil,

dadurch gekennzeichnet, daß der Aminanteil des Katalysators eine Mischung aus N,N'-Di-t-butyläthylendiamin, n-Butyldimethylamin und Di-n-butylamin enthält.

**Revendications**

1. Une composition catalytique utile pour la préparation d'une résine de poly(éther de phénylène) comprenant

(a) un composé contenant du brome;

(b) un composé cuivreux;

(c) un composé cuivrique; et

(d) une portion d'amine,

caractérisée en ce que la portion d'amine du catalyseur comprend une diamine secondaire et une amine tertiaire.

2. Une composition selon la revendication 1, dans laquelle la diamine secondaire a pour formule

$$R^1NH—R^2—NHR^1$$

dans laquelle chaque $R^1$ est indépendamment un groupe isopropyle, alkyle tertiaire en $C_{4-8}$ ou cycloalkyle n'ayant pas d'atome d'hydrogène sur l'atome de carbone α et $R^2$ a au moins deux et pas plus de trois atomes de carbone séparant les atomes d'azote et est un alkylène en $C_{2-4}$ ou un alkylène en $C_{3-7}$.

3. Une composition selon la revendication 2, dans laquelle la diamine secondaire est la N,N'-di-tert-butyléthylènediamine.

4. Une composition selon la revendication 1 dans laquelle l'amine tertiaire est une trialkylamine inférieure dans laquelle les groupes alkyles ont 1 à 6 atomes de carbone.

5. Une composition selon la revendication 4, dans laquelle l'amine tertiaire est la n-butyldiméthylamine.

6. Une composition selon la revendication 1, dans laquelle le composant (d) comprend également une monoamine secondaire.

7. Une composition selon la revendication 6, dans laquelle l'amine tertiaire est une trialkylamine inférieure dans laquelle les groupes alkyles ont 1 à 6 atomes de carbone et la monoamine secondaire est un composé de formule

$$R—N(H)—R'$$

dans laquelle R et R' sont indépendamment choisis dans le groupe constitué par les alkyles inférieurs ayant 1 à 12 atomes de carbone.

8. Une composition selon la revendication 1, dans laquelle la diamine secondaire est la N,N'-di-tert-butyléthylènediamine, l'amine tertiaire est la n-butyldiméthylamine et la monoamine secondaire est la di-n-butylamine.

9. Une composition selon la revendication 1, dans laquelle le rapport molaire du cuivre cuivrique au cuivre cuivreux est dans la gamme entre 3/1 et 1/3.

10. Une composition selon la revendication 1, qui contient la diamine secondaire en une quantité de 1 à 3 moles par atome-gramme de cuivre.

11. Une composition selon la revendication 1, qui comprend le composé contenant du brome en une quantité suffisante pour assurer un rapport des atomes de brome par atome de cuivre entre 5/1 et 50/1.

12. Une composition catalytique utile pour la préparation d'une résine de poly(éther de phénylène) comprenant

(a) de l'acide bromhydrique;

(b) un composé cuivreux choisi dans le groupe constitué par l'oxyde cuivreux et le chlorure cuivreux;

(c) un composé cuivrique choisi dans le groupe constitué par l'oxyde cuivrique et le chlorure cuivrique; et

(d) un mélange de N,N'-di-tert-butyléthylènediamine, de n-butyldiméthylamine et de di-n-butylamine.

13. Procédé pour la préparation d'une résine de poly(éther de phénylène) par couplage par oxydation d'un composé phénolique en présence d'un catalyseur comprenant

(a) un composé contenant du brome;

(b) un composé cuivreux;

(c) un composé cuivrique; et

(d) une portion d'amine,

caractérisé en ce que la portion d'amine du catalyseur comprend une diamine secondaire et une amine tertiaire.

14. Un procédé selon la revendication 13, dans lequel la réaction est effectuée essentiellement en l'absence de méthanol.

15. Un procédé selon la revendication 13, dans lequel le composé phénolique a pour formule

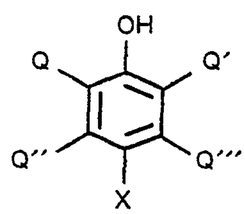

dans laquelle X est choisi dans le groupe de l'hydrogène, du chlore, du brome et de l'iode et Q, Q', Q'' et Q''' sont indépendamment choisis dans le groupe constitué par un hydrogène, un halogène, les radicaux hydrocarbonés, les radicaux halogénohydrocarbonés, les radicaux hydrocarbonoxy et les radicaux halogénohydrocarbonoxy.

16. Un procédé selon la revendication 13, dans lequel le composé phénolique est le 2,6-xylénol.

17. Un procédé selon la revendication 13, dans lequel la résine de poly(éther de phènylène) a pour formule

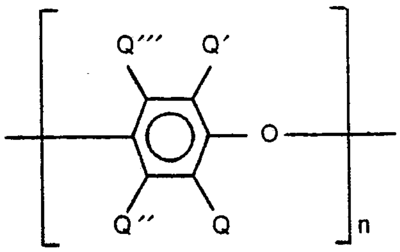

dans laquelle Q, Q', Q'' et Q''' sont indépendamment choisis dans le groupe constitué par un hydrogène, un halogène, les radicaux hydrocarbonés, les radicaux halogénohydrocarbonés, les radicaux hydrocarbonoxy et les radicaux halogénohydrocarbonoxy; et n représente le nombre total des motifs monomères et est un entier d'au moins environ 20.

18. Un procédé selon la revendication 13, dans lequel la résine de poly(éther de phénylène) est le poly(éther de 2,6-diméthyl-1,4-phénylène).

19. Un procédé selon la revendication 13, dans lequel le rapport molaire du cuivre cuivrique au cuivre cuivreux est entre 3/1 et 1/3.

20. Un procédé selon la revendication 13, dans lequel la diamine secondaire a pour formule

$$R^1HN—R^2—NHR^1$$

dans laquelle chaque $R^1$ est indépendamment un groupe isopropyle, alkyle tertiaire en $C_{4-8}$ ou cycloalkyle n'ayant pas d'atome d'hydrogène sur l'atome de carbone α et $R^2$ a au moins 2 et pas plus de 3 atomes de carbone séparant les deux atomes d'azote et est un alkylène en $C_{2-4}$ ou un alkylène en $C_{3-7}$.

21. Un procédé selon la revendication 20, dans lequel la diamine secondaire est la N,N'-di-tert-butyléthylènediamine.

22. Un procédé selon la revendication 13, dans lequel l'amine tertiaire est une trialkylamine inférieure dont les groupes alkyles ont 1 à 6 atomes de carbone.

23. Un procédé selon la revendication 13, dans lequel l'amine tertiaire est la n-butyldiméthylamine.

24. Un procédé selon la revendication 13, dans lequel le composant (d) de la composition catalytique comprend également une amine tertiaire et une monoamine secondaire.

25. Un procédé selon la revendication 24, dans lequel l'amine tertiaire est une trialkylamine inférieure dont les groupes alkyles ont 1 à 6 atomes de carbone, et la monoamine secondaire est un composé de formule

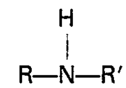

dans laquelle R et R' sont choisis indépendamment dans le groupe constitué par les alkyles inférieurs ayant de 1 à 12 atomes de carbone.

26. Un procédé selon la revendication 25, dans lequel la diamine secondaire est la N,N'-di-tert-butyléthylènediamine, l'amine tertiaire est la n-butyldiméthylamine et la monoamine secondaire est la di-n-butylamine.

27. Un procédé selon la revendication 13, dans lequel la composition catalytique contient la diamine secondaire en une quantité de 1 à 3 moles par atome-gramme de cuivre.

28. Un procédé selon la revendication 13, dans lequel la composition catalytique contient le composé de brome en une quantité suffisante pour assurer un rapport des atomes de brome par atome de cuivre entre 5/1 et 50/1.

29. Procédé pour la préparation d'une résine de poly(éther de 2,6-diméthyl-1,4-phénylène) par couplage par oxydation du 2,6-xylénol, en présence d'une composition catalytique comprenant

(a) de l'acide bromhydrique;

(b) un composé cuivreux choisi dans le groupe constitué par l'oxyde cuivreux et le chlorure cuivreux;

(c) un composé cuivrique choisi dans le groupe constitué par l'oxyde cuivrique et le chlorure cuivrique; et

(d) une portion d'amine,

caractérisé en ce que la portion d'amine du catalyseur comprend un mélange de N,N'-di-tert-butyléthylènediamine, de n-butyldiméthylamine et de di-n-butylamine.